# EUROPEAN PATENT APPLICATION

(11) **EP 3 950 802 A1**
(43) Date of publication of application: **09.02.2022**
(21) Application number: 20189643.8
(22) Date of filing: 05.08.2020
(51) Int. Cl.: C08K 3/34, C08L 61/06, B32B 21/08, C09J 161/06

(54) **ADHESIVE COMPOSITION FOR MAKING WOOD LAMINATES**

(71) Applicant: Metadynea Austria GmbH, 3500 Krems (AT)
(72) Inventor: Kantner, Wolfgang, 3900 Schwartzenau (AT)
(74) Representative: Hoyng Rokh Monegier B.V.

(57) **Abstract**

The invention relates to an adhesive composition for the manufacture of a wood laminate comprising two or more wood layers alternating with one or more adhesive layers, wherein the adhesive composition comprises an phenol formaldehyde adhesive resin solution in water and a particulate filler comprising a non-swellable phyllosilicate, the particulate filler having an average grain size d50 ranging between 1 and 20 µm, the adhesive composition comprising an amount of between 20 and 90 wt.% of the particulate filler relative to the total dry solids weight of the particulate filler and the adhesive resin. The invention also relates to a process for the manufacture of the adhesive composition and of the wood laminates, to wood laminates and the use thereof for the manufacture of articles for outdoor use.

## Description

### BACKGROUND OF THE INVENTION

### 1. Field of the Invention

The invention relates to an adhesive composition for making wood laminates, to wood laminates and to a process for the manufacture of the adhesive composition and for the manufacture of the wood laminates. Wood laminates are also referred to as plywood or veneer.

### 2. Description of the Related Art

A wide variety of adhesives and processes are known for preparing wood laminates. Among the most widely used adhesives are phenol-aldehyde condensation products, typically phenol-formaldehyde (PF) and phenol urea formaldehyde (PUF). Typically, these adhesives are applied to wood plies and the plies are then subjected to a pressing operation to consolidate them into a unitary panel and cure the adhesive. The adhesive compositions are typically water-based and comprise a binder resin, typically also a hardener, optionally a curing catalyst. The adhesive composition can be modified with extenders, such as starch, wood flour, nutshell flour, with fillers, such as clays, to modify the properties but also to reduce production time and reduce cost.

Waage et al (in Journal of Applied Polymer Science 42:273-278, 1991) describe the effects of fillers and extenders on the curing properties of phenol-formaldehyde resin as determined by the application of thermal techniques. Clay minerals were used to improve the curing behavior of phenolic plywood resins, but the effect was small and increased viscosity had detrimental consequences in the application of the resins.

Zeppenfeld & Grunwald (in Klebstoffe in der Holz- und Mobelindustrie. DRW-Verlag ISBN-10: 3871813591 and ISBN-13: 978-3871813597, 2005) describe several inert fillers, such as flat mica and talc, that can be added to resins. However, these fillers show bad wettability and tend to agglomerate and sediment, which is a disadvantage in a glue as it is required that a glue mix is homogenous. Some inorganic fillers have the potential to increase the viscosity of the glue a lot, others induce thixotropic behavior. Both effects are problematic in the application process for plywood.

Lecka et al (in Ann WULS - SGGW, For and Wood Technol 83:191-195, 2013; 'Effect of addition of titanium dioxide and talc on properties of phenolic resin and water-resistant plywood') used talc to partly substitute titanium dioxide as pigment in birch plywood bonded with phenolic resin.

Doosthoseini et al (in Journal of the Indian Academy of Wood Science 7: 58, 2011; 'Using Na+MMT nano-clay as a secondary filler in plywood manufacturing') used small amounts of sodium montmorillonite nano-clay (up to 7.5 wt.%) together with urea formaldehyde (UF) resin and hardener.

Lei et al. (in Journal of Applied Polymer Science 109:2442-2451, 2008; 'Influence of nano-clay on urea-formaldehyde resins for wood adhesives and its model') used the same filler (up to 8 wt.%) with UF resin and replaced that with wheat flour.

Lei et al. (in Journal of Adhesion Science and Technology 24:1567-1576, 2010, 'Influence of Nano-clay on Phenol-Formaldehyde and Phenol-Urea-Formaldehyde Resins for Wood Adhesives'). extended the investigations of nano-clay montmorillonite (addition rate 1-5 wt.%) to phenol formaldehyde (PF) resins and PUF resins.

Nanosilica was used by several groups as additive for amino resin bonded plywood boards. Dukarska et al (in Journal of Polymer Research 23: 1-8, 2016; 'The effect of organofunctional nanosilica on the cross-linking process and thermal resistance of UF resin'). Lin et al (in Frontiers of Forestry in China 1:230, 2006; 'Property of nano-SiO₂/urea formaldehyde resin'). Moezzipour et al (in Journal of the Indian Academy of Wood Science 10:118-124, 2013; 'The effect of different kinds of nanosilica on practical properties of plywood').

Riegler et al (in Holztechnologie 3:10-14, 2019; 'Funktionsorientierte Holzwerkstoffe durch "intelligente Additive) investigated effects of minor amounts of silicate particle additives in UF binder resin on particle board properties.

Hartman et al describe in US patent US4441954 Phenol-Aldehyde Bentonite Adhesive Composition and a process for making wood laminates. Phenol formaldehyde resin was used with colloidal, acicular magnesium aluminum silicate clay like bentonite in amounts of 5-50%.

Wang et al describe in US patent application US2008/0234423 phyllosilicate modified resins for lignocellulosic fibre-based composite panels. A fine phyllosilicate clay dispersed in duroplastic resin was used together with lignocellulose fibers for making Oriented Strand Board (OSB) and Medium density fiberboard (MDF). Wang does not describe plywood adhesive.

Although many different particle filled adhesive compositions have been described for wood laminates, there is still a desire for an adhesive composition for wood laminates that is less expensive and results in wood laminates having good mechanical properties and water resistance properties, in particular to meet the class 3 plywood classification in shear strength requirements after boiling in water in accordance with standard EN 314.

### DESCRIPTION OF THE INVENTION

The present invention addresses these problems by providing an adhesive composition for the manufacture of a wood laminate comprising two or more wood layers alternating with one or more adhesive layers, wherein the adhesive composition comprises a phenol formaldehyde adhesive resin solution in water and a particulate filler comprising a non-swellable phyllosilicate, the particulate filler having an average grain size d50 (determined by a Micromeritics sedigraph 5120) ranging between 1 and 20 µm, preferably between 2 and 15 µm, more preferably between 3 and 10 µm, the adhesive composition comprising an amount of between 20 and 90 wt.%, preferably between 30 and 85 wt.%, more preferably between 40 and 80 wt.% of the particulate filler relative to the total dry solids weight of the particulate filler and the phenol formaldehyde adhesive resin.

The phyllosilicate particulate filler used in the adhesive composition of the invention must be non-swellable. The phyllosilicates types are classified, and it can be found in literature whether a phyllosilicate is water swellable or not. Phyllosilicates like nano-clays, that are often used as fillers in adhesive compositions are water swellable as they bind water molecules to free surfaces by electrostatic attraction from mineral lattice charge deficiencies. Mildly swelling phyllosilicates like Vermiculite are not considered non-swelling. The inventors found that non-swellable phyllosilicates with the specified low particle size can be used in relatively high amounts in the adhesive composition without compromising stability and handling properties of the adhesive compositions and resulting in strong and less expensive wood laminate products. It is surprising that addition of a chemically inert particulate filler in such high amounts does not deteriorate the strength properties, but instead even can increase strength properties.

In the adhesive composition according to the invention the non-swellable phyllosilicate preferably is natural or synthetic non-swellable mica or talc, preferably natural mica chosen from the group consisting of muscovite, phlogopite, iron mica, biotite and sericite or artificial mica chosen from the group consisting of fluorine phlogopite mica, potassium tetra-silicon mica and calcined natural mica, more preferably the non-swellable phyllosilicate is muscovite and phlogopite and most preferably muscovite.

In nature the non-swellable phyllosilicate rarely occurs in pure form. Usually a mineral material is found that comprises non-swellable phyllosilicate material which then optionally can be purified to increase the amount of the non-swellable phyllosilicate and can be ground to reduce the particle size. The non-swellable phyllosilicate itself can have a variation in composition; for example, the preferred non-swellable phyllosilicate muscovite may comprise limited amounts of Mg²⁺ and Fe²⁺ as solid solutions. These solid solutions are called "phengites". Apart of the non-swellable phyllosilicate (preferably muscovite or phengite), the particulate filler may comprise other mineral components. Preferably the mineral co-components in the particulate filler are also non-swellable, for example quartz or chlorite.

Preferably, the particulate filler is a mineral material comprising at least 20 wt.%, preferably at least 30 wt.%, more preferably at least 40 wt.% and even more preferably at least 50, 75 or even at least 90 wt.% of the non-swellable phyllosilicate relative to the total weight of the particulate filler. Preferably, the adhesive composition comprises an amount of the non-swellable phyllosilicate of at least 20 wt.%, preferably at least 30 wt.%, more preferably at least 40 wt.% and even more preferably at least 50 or even at least 75 wt.% relative to the total dry weight of the non-swellable phyllosilicate and the adhesive resin.

The chemical composition of the particulate filler can be characterised in known ways, for example with X-Ray fluorescence or scanning electron microprobes, and is published for many mineral materials. The preferred phyllosilicate is muscovite and preferably comprises 40 - 80 wt.% SiO₂, 10 - 40 wt.% Al₂O₃ and 4 - 10% K₂O and optional minor amounts of other elements like for example Magnesium and Iron. A preferred particulate filler is phengite.

It was found that the particle size is important. Mineral material comprising the non-swellable phyllosilicate typically may have very large crystal size and is ground and sieved to the specified particle size range described above. Preferably, the particle size distribution determined by a Micromeritics Sedigraph 5120 is characterised by a d98 between 15 and 25 µm, a d90 between 5 and 15 µm, a d50 between 2 and 20 µm and a d30 between 1 and 5 µm. Preferably the d50 is between 2 and 15 µm, more preferably between 3 and 10 µm.

The adhesive composition according to the invention is prepared by mixing the particulate filler with a phenol formaldehyde resin solution in water. The phenol formaldehyde resin solution is characterized by having
a) a dry solids weight of phenol formaldehyde resin relative to the total weight of the phenol formaldehyde resin solution is between 30 and 70 wt.%, preferably between 35 and 60 wt.%, more preferably between 40 and 55 wt.% (measured after 3 hours oven drying at 105°C),
b) a free alkalinity between 3 and 10 wt.% preferably between 4 and 9 wt.% and more preferably between 5 and 8 wt.% as determined by acid titration and expressed as gr NaOH per 100 gr of the phenol formaldehyde resin solution x 100%.
c) a viscosity preferably between 100 and 2000 mPas, more preferably between 150 - 1700 mPas even more preferably between 200 - 1500 mPas wherein the viscosity is measured with cone/plate Viscometer (Anton Paar MCR-51) with a spindle of 49.978 mm diameter, 0.992° angle and 99 µm truncation at 20°C and a shear rate of 100/s.

Free alkalinity means alkalinity that is not bound and is determined by HCl titration to an equilibrium point at pH = 6.5. The moles of acid titrated to that equilibrium point is taken to correspond to the moles of free alkalinity. The free alkalinity is expressed as the corresponding amount in gr NaOH per 100 gr of the phenol formaldehyde resin solution x 100%. It is noted that the free alkalinity is lower than the total alkalinity, which corresponds to the amount of alkaline material added, and which also includes alkalinity that is bound for example to the phenol.

In the adhesive composition a part of the PF resin is replaced with the specified mineral filler as described above and the total dry solids weight of the particulate filler and phenol formaldehyde resin is in the same range as the ranges specified above for the phenol formaldehyde resin solids content. The free alkalinity of the adhesive composition is lower compared to the free alkalinity of the PF resin solution because of the gravimetric dilution by the particulate filler and thus the range of free alkalinity in the adhesive composition is in the range from of 0.5 - 9 wt.%. The viscosity of the adhesive composition including the particulate filler is to some extent determined by the indicated viscosity of the PF resin used but also by the particulate fillers, in particular by the particle size thereof, and by optional other additives. The skilled person choses the viscosity also in view of application method parameters. Typically, the viscosity of the adhesive composition e.g. for roller application is in the range between 300 and 500 mPas (as determined with a plate-plate viscometer at 20°C and a shear rate of 1053/s using Cylinder PP50 at a duration of measurement of 20 sec.

The adhesive composition preferably consists of the particulate filler, the phenol formaldehyde resin solution in water and one or more optional additives in a total amount ranging between 0 and 30 wt.%, preferably between 0 and 20 wt.%, more preferably between 1 and 20 wt.% relative to the total weight of the adhesive composition, wherein the further additives are preferably chosen from the list consisting of other fillers, pigments, hardeners, curing catalyst, preferably one or more further additives chosen from the list consisting of starch, wood flour, nutshell flour, chalk. Typically, the water content in the adhesive composition ranges between 20 and 80 wt.%, preferably between 25 and 70 wt.% more preferably between 30 and 60 wt.% the remainder being the total solids content. The water content in the adhesive composition can vary depending on the application method. Different replacement rate of the phenol formaldehyde by phyllosilicate containing particulate filler and different grain sizes may need different amounts of water to achieve a viscosity optimized for the given application method. A preferred application method is roller application the preferred rage is between 30 and 50 wt.% for a replacement rate of 40 - 60 wt% of the phenol formaldehyde by phyllosilicate containing particulate filler, preferably muscovite containing particulate filler having particle size between 3 and 10 micrometer.

In another aspect the invention relates to a process for the manufacture of the adhesive composition according to the invention anyone comprising the steps of
I. providing a phenol-formaldehyde resin solution in water
   a) wherein the dry solids weight of phenol-formaldehyde resin relative to the total weight of the resin and water is between 30 and 70 wt.%, preferably between 35 and 60 wt.%, more preferably between 40 and 55 wt.% (measured after 3 hours oven drying at 105°C),
   b) having a free alkalinity between 3 and 10 wt.%, preferably between 4 and 9 wt.% and more preferably between 5 and 8 wt.% as determined by acid titration and expressed as gr NaOH per 100 gr of the adhesive composition x 100%,
   c) having a viscosity preferably between 100 and 2000 mPas, more preferably between 150 - 1700 mPas even more preferably between 200 - 1500 mPas wherein the viscosity is measured with cone/plate Viscometer (Anton Paar MCR-51) with a spindle of 49.978 mm diameter, 0.992° angle and 99 µm truncation at 20°C and a shear rate of 100/s,
II. providing particulate filler comprising a non-swellable phyllosilicate, the particulate filler having an average grain size d50 (determined by a Micromeritics sedigraph 5120) ranging between 1 and 20 µm, preferably between 2 and 15 µm, more preferably between 3 and 10 µm,
III. optionally providing additives in a total amount of no more than 30 wt.% relative to the total weight of the adhesive composition,
IV. mixing the phenol-formaldehyde resin solution with the particulate filler and optional additives in relative amounts such that the adhesive composition comprises an amount between 20 and 90 wt.%, preferably between 30 and 85 wt.%, more preferably between 40 and 80 wt.% of the particulate filler relative to the total dry solids weight of the adhesive resin and particulate filler.

In yet another aspect the invention relates to a process for the manufacture of a wood laminate comprising the step of
a. providing two or more wood layers,
b. providing the adhesive composition according to the invention,
c. applying one or more layers of the adhesive composition on at least one surface of the two or more wood layers, preferably in an amount of between 100 and 200 gr/m², more preferably between 100 and 160 gr/m², even more preferably between 100 and 140 gr/m²,
d. stacking the two or more wood layers alternating with the one or more adhesive layers forming an uncured wood laminate stack,
e. optionally allowing the adhesive composition to penetrate into the wood and partially dry, preferably for at least 5, 7 or at least 10 minutes,
f. pressing and curing the uncured wood laminate stack to form the wood laminate in one or more separate pressing steps,
   a. preferably at a pressing temperature between 90 and 150 °C, preferably between 100 and 140 °C, more preferably between 110 and 140 °C,
   b. preferably at a pressure between 10 and 200 N/cm² and
   c. preferably for a total time of at least 2 minutes,
   d. wherein the pressing is preferably done at constant temperature and with at least one step at a pressure between 100 and 200 N/cm² for at least 2 minutes.

The amount of adhesive composition applied on a surface of the wood layers is chosen to be high enough to provide sufficient bonding between the adjacent wood layers and preferably is at least 100 gr/m² but is on the other hand preferably as low as possible in particular in view of cost of the adhesive resin. An advantage of the invention is that not only less adhesive resin is applied due to the replacement of resin by the particulate filler, but that even a lower amount (in weight per surface area) of the adhesive resin can be applied while still achieving a good bond strength, so good results are obtained when the amount applied is between 100 and 160 gr/m² and more preferably between 100 and 140 gr/m². The amount give above is typical for roller application of the adhesive. In case of spray application, but other application methods can be used as well using the above amounts ranges. A particular advantage of the invention is that the amount of resin applied to the surface of the wood layers can be low. Preferably, the amount of resin applied to the surface is between 10 and 60 gr/m², preferably between 15 and 55 gr/m², more preferably between 20 and 50 gr/m² even more preferably between 20 and 40 gr/m² Preferably, the total amount of solids applied to the surface is between 20 and 120 gr/m², preferably between 40 and 110 gr/m², more preferably between 50 and 100 gr/m² even more preferably between 40 and 90 gr/m².

A typical procedure for the manufacture of a wood laminate comprises a lay-up time between 5 and 20 min, preferably between 7 and 15 min, most preferably about 10 min and an open time between 5 and 20 min, preferably between 7 and 15 min, most preferably about 10 min. The lay-up time is the time needed for applying the adhesive on the veneers and stapling them. The open time is the time before the pile of stapled veneers is put into the hot press.

Preferably, the pressing is done with press platens kept at a substantially constant temperature and pressing is done in one step or two or more pressing steps with different pressures. It is easiest to keep the temperature of the press platen constant and to vary the pressure. Preferably, the constant press platen temperature is chosen between 90 and 150°C, more preferably between 100 and 140°C even more preferably between 110 and 130°C, typically about 125°C and pressing pressure is changed in two or more steps with each step preferably between 0.5 and 10 minutes and in total at least 2 minutes to allow sufficient compressing and curing. Preferably, the pressing pressure is lowered in each subsequent step. For example, good results were obtained with pressing at 125°C in 3 consecutive steps for 4 + 4 + 1 min at a pressure of 150 / 60 / 30 N/cm² respectively.

The invention also relates to a wood laminate comprising two or more wood layers alternated with one or more adhesive layers of the dried and cured adhesive composition according to the invention, wherein the dried and cured adhesive layer preferably has an average thickness between 10 and 200 µm, preferably between 20 and 180 µm and more preferably 30 and 150 µm and which wood laminate is preferably obtainable by the above described process.

The wood layers are chosen in view of the intended use and application. Soft wood veneer layers like larch, spruce or pine are considered advantageous in view of compressibility and price, but the invention works very well with relatively hard wood like birch and poplar. In view of strength properties, the wood layers are preferably between 0.5 and 3 mm and preferably successive wood layers are glued together with their grain direction at an angle, typically at right angles. The wood laminate is preferably obtained by the above described process.

The wood laminate according the invention has a water resistance and good wet strength as preferably characterized in that a test specimen of a dimension 25 x 25 mm², after 72 hours boiling has a shear strength exceeding 1 N/mm² as measured in accordance with the standard EN 314, wherein EN 314-1 describes the test procedure and EN 314-2 describes the quality of the adhesion and the requirements. The wood laminates meet the class 3 plywood classification in EN 314 test. Therefore, the wood laminate is very suitable for outdoor use and for the manufacture of articles for outdoor use. The wood laminate also has low formaldehyde emission and can meet the technical requirements according to formaldehyde emission test ASTM 6007. Therefore, the wood laminate is also very suitable for indoor use. Because the particulate filler comprising non-swellable phyllosilicate material can be less expensive than the binder material and because the adhesive composition can comprise a very large amount of the particulate filler, even up to 90% of the total dry solids, the adhesive composition and thus also the wood laminate can be less expensive without compromising properties.

Because of the very good weather resistance of the wood laminate of the invention, the invention also relates to the use of the wood laminate according to the invention for the manufacture of articles for outdoor use.

Thus, the invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the spirit and scope of the invention. Accordingly, although specific embodiments have been described, these are examples only and are not limiting upon the scope of the invention. The invention is further illustrated by the following examples.

### EXAMPLES:

### Example series 1:

Plywood boards were manufactures using Birch veneers of the size 500 x 500 x 1.5 mm.

The phenolic resin (PF resin) used was a phenol-formaldehyde solution in water (Primere 14J400 from Metadynea). The solid content of the phenolic resin was 46.4 wt.% (oven measured: 3 hours at 105°C). The viscosity was determined with a plate-plate viscometer at 20°C and a shear rate of 100/s: 340 mPas. The free alkalinity of the PF resin used was 7.0-7.5 wt.%

The particulate filler comprising non-swellable phyllosilicate used in the first series was a Muscovite containing mineral (Aspolit F40 obtained from Aspanger). The particle size distribution shows the following characteristics: d98: 20 µm, d90: 9 µm, d50:4 µm, d30: 2.5 µm. The elemental composition (expressed in oxides as specified) is: SiO₂: 69.0%, Al₂O₃: 15.5%, K₂O: 6.5%, MgO: 2.8%, Fe₂O₃: 2.0%, TiO₂: 0.5%, and CaO: 0.5%. The elemental composition can be determined by Scanning electron microprobes or X-ray fluorescence analysis. The proportion of pure muscovite in the Aspolit types is between 45% and 65%, typically approximately 50 wt.%. which is independent of the degree of grinding. The remainder is quartz and/or chlorite. Further, chalk and flour powder were added to the adhesive mixture as extender. Adhesive compositions were prepared by mixing the PF resin, the muscovite containing particulate filler and additives in relative amounts as indicated in table 1. The ratio of particulate filler to the total of PF resin and particulate filler is 50 wt.%. The indicated wt.% of particulate filler and additives are relative to the total weight of the adhesive composition, the remainder being water.

Plywood boards were made by applying adhesive composition between 9 birch veneer layers, laminating and pressing. The adhesive composition was weighed onto 1 side of the veneer layers except for the last veneer in the stack and distributed equally over the whole surface with a roller. The veneers were layed on top of each other with texture turned by 90° for every 2nd veneer. Within 10 min the 9-layer stack was build up (i.e. the lay-up time) and brought into the pre-heated hot-press. The time before the pile of stacked veneers is put into the hot press (the open time) and pressing begins was 10 minutes. The amount of adhesive composition applied was 155 g/m² in the reference sample and was lower in the examples to raise the total solids content to about the same level as for the reference resin (as indicated in table 1). The pressing was done using conditions chosen to reflect average conditions in a typical plywood mill: Lay-up time: 10 min; Open time: 10 min; Platen temperature: 125°C; Pressing time: 4 + 4 + 1 min; Pressure: 150 / 60 / 30 N/cm².

Specimens per board were cut out with the dimension 25 mm x 25 mm which were used for the strength tests after 72 hours boiling. The standard EN 314 is met when the shear strength is exceeding 1 N/mm². The shear strength was measured using a Zwick testing machine with a Force transducer of 10 kN. The shear strength 72h/100C (in N/mm²) was measured after 72 hours in boiling water at 100°C The results are listed in Table 1.

**Table 1: plywood board composition and testing results**

| **Veneer sample** | **Shear strength 72h/100C** | **% PF solid** | **% phyllosilicate** | **% Chalk** | **% Flour** | **Spread [g/m²]** | **Total Solids content** | **Total solids applied [g/m²]** | **Resin applied [g/m²]** |
|---|---|---|---|---|---|---|---|---|---|
| Ref 1 | 1.29 | 35.03 | 0 | 8.18 | 4.58 | 155.00 | 48 | 74 | 54 |
| E1.1 | 1.43 | 25.02 | 25.02 | 6.40 | 3.56 | 140.00 | 60 | 84 | 35 |
| E1.2 | 1.36 | 24.62 | 24.62 | 6.90 | 3.86 | 130.00 | 60 | 78 | 32 |
| E1.3 | 1.34 | 24.15 | 24.15 | 7.50 | 4.20 | 120.00 | 60 | 72 | 29 |

### Example series 2;

In Example series 2 the bond strength was tested with ABES (Automated Bonding Evaluation System): bonding of 2 veneer stripes with subsequent sheartest in function of temperature and pressing time. The adhesive composition only comprises PF resin described above and particulate fillers in an amount of 50 wt.% relative to the total dry weight of the PF resin and the particulate fillers. The particulate fillers used were respectively Reference (no particulate filler), Muscovite type 1, Muscovite type 2, Kaolin and Diatomaceous Earth. Muscovite type 1 (Mica SFG) is a purified muscovite having a muscovite content above 65 wt.%, Muscovite type 2 is unpurified muscovite (Aspolit F30) having a muscovite content of about 50 wt.%. The adhesive composition did not comprise other additives.

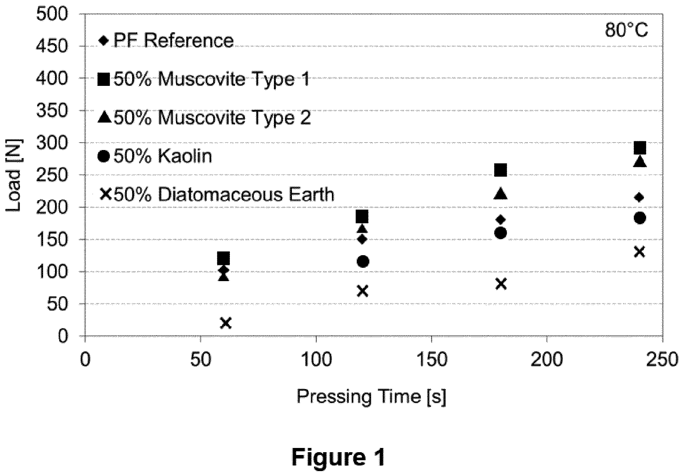

The automatic bonding evaluation system (ABES) was used in order to assess the bond strength development rate as a function of the pressing time. ABES test specimens were prepared by weighing an amount of 15 mg adhesive composition onto a veneer stripe with dimensions: 117.5 mm x 20 mm; 0.5 mm thick and distributed with a second stripe for an overlapping area of 5 x 20 mm. The specimens were pressed for a given time and pulled immediately after pressing to determine the shear strength. For this test a press temperature of 80°C was chosen. Other test conditions are the same as described above. The results are given in Figure 1, showing the shear strength in N as a function of the pressing time.

The results show that adhesive compositions according to the invention with 50% replacement of the PF resin by muscovite-like phyllosilicates are outperforming the PF reference resin and adhesive compositions with other silicates (kaolin and diatomaceous Earth) with the same replacement rate.

### Example series 3:

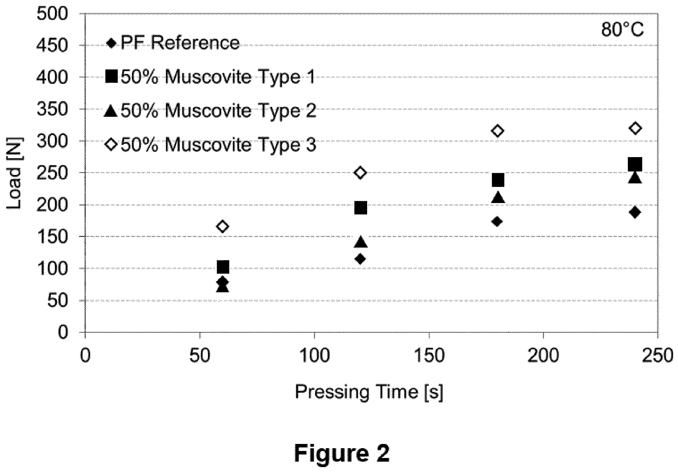

In Example series 3 ABES tests were done as described above in Example series 2 to show the bond strength development of adhesive compositions with muscovite-like phyllosilicates with different average grain sizes compared to a PF reference without additives as a function of the pressing time. Muscovite type 1 has d50 of 6 µm (Mica SFG), Muscovite type 2 has a d50 of 3 µm (Aspolit F30), Muscovite type 3 has d50 of 4 µm (Aspolit F40). The measurements are shown in Figure 2 showing an optimum of the grain size at about 4 µm.

### Example series 4:

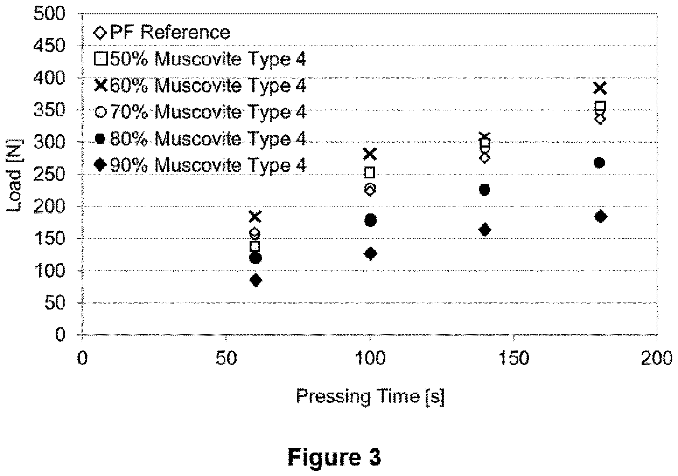

In Example series 4 ABES tests were done as described above in Example series 2 to show the bond strength as function of the pressing time comparing different replacement rates of PF resin by Muscovite type 4 (same as Muscovite type 3 but a different batch of Aspolit F40. The amounts of Muscovite type 4 in the various tested adhesive compositions are 50, 60, 70, 80 and 90 wt.% relative to total weight of PF resin and the Muscovite type 4. The results are shown in Figure 3, showing that the best performance is obtained at a 60 wt.% replacement rate. It is surprising that with the muscovite particulate filler such high wt.% of particulate filler and low wt.% of PF resin can be used without deterioration of the shear strength property and in some instances even an improvement. Interestingly, even 90wt. % replacement of the PF resin by Muscovite type 4 still gave remarkably good results.

### Example series 5:

Tests were done to compare Muscovite phyllosilicate (Aspolit F40) with other non-swellable phyllosilicates. These can be characterized by their chemical composition and their grain size. The conditions for preparing, making and testing the plywood boards were equal to those described in Example 1. Addition of 25.5 wt.% PF solid, 25.5 wt.% Phyllosilicate, 5.8 wt.% Chalk and 3.2 wt.% Flour was the same for all boards. The viscosity of the adhesive composition was 321 mPas as determined with a plate-plate viscometer at 20°C and a shear rate of 100/s. Table 2 shows the measurement results of the plywood boards. The results show that very good shear strength results were obtained with non-swellable phyllosilicates that have a low Average grain size d50 (in µm).

**Table 2:**

| **Board** | **Shear strength 72h/100C** | **Type Phyllosilicate** | **d50 [µm]** | **Spread [g/m²]** | **Press-time [min]** |
|---|---|---|---|---|---|
| E5.1 | 2.39 | Aspolit F40 | 4 | 140 | 9 |
| C5.2 | 1.06 | Micavi 100 | 50 | 140 | 9 |
| C5.3 | 0.67 | Trefil 1232-500 | 35 | 140 | 9 |
| E5.4 | 1.38 | Talkum HB-M20B | 4 | 140 | 9 |

### Example series 6 and Comparative Example 1:

Tests were done to compare Muscovite phyllosilicate (Aspolit F40) with montmorillonite (Comparative example 1). Montmorillonite is a very fine grain phyllosilicate clay which is water swellable. The conditions for preparing, making and testing the plywood boards were equal to those described in Example 1. The amount of the particulate filler in the adhesive composition was also 50 wt.% relative to the total dry weight of the PF resin and the particulate filler. The total solids content of the phenolic resin was 47.2% (oven-measured: 3 hours at 105°C). The viscosity of the adhesive composition was determined to be 380 mPas (with a plate-plate viscometer at 20°C and a shear rate of 100/s). Table 3 shows the composition details and the measurement results of the plywood boards.

**Table 3:**

| **Board** | **Shear strength 72h/100C** | **% PF solid** | **% Musco vite** | **% Montmo rillonite** | **% *Chalk*** | **% Flour** | **Spread [g/m²]** | **Press-time [min]** |
|---|---|---|---|---|---|---|---|---|
| E6a | 1.83 | 25.50 | 25.50 | 0 | 5.8 | 3.2 | 140.00 | 9 |
| E6b | 1.88 | 25.50 | 25.50 | 0 | 5.8 | 3.2 | 140.00 | 7 |
| CE6a | 1.50 | 25.50 | 0 | 25.50 | 5.8 | 3.2 | 140.00 | 9 |
| CE6b | 1.31 | 25.50 | 0 | 25.50 | 5.8 | 3.2 | 140.00 | 7 |

The comparative example shows that the adhesive composition according to the invention results in significant better shear strength than the adhesive compositions comprising montmorillonite in the same amount.

Thus, the invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the spirit and scope of the invention. Accordingly, although specific embodiments have been described, these are examples only and are not limiting upon the scope of the invention.

## Claims

1. An adhesive composition for the manufacture of a wood laminate comprising two or more wood layers alternating with adhesive layers, wherein the adhesive composition comprises a phenol formaldehyde adhesive resin solution in water and a particulate filler comprising a non-swellable phyllosilicate, the particulate filler having an average grain size d50 (determined by a Micromeritics Sedigraph 5120) ranging between 1 and 20 µm, preferably between 2 and 15 µm, more preferably between 3 and 10 µm, the adhesive composition comprising an amount of between 20 and 90 wt.% preferably between 30 and 85 wt.%, more preferably between 40 and 80 wt.% of the particulate filler relative to the total dry solids weight of the particulate filler and the adhesive resin.

2. The adhesive composition according to claim 1, wherein the non-swellable phyllosilicate is a natural- or synthetic non-swellable mica or talc, preferably natural mica chosen from the group consisting of muscovite, phlogopite, iron mica, biotite and sericite or artificial mica chosen from the group consisting of fluorine phlogopite mica, potassium tetra-silicon mica and calcined natural mica, more preferably the non-swellable phyllosilicate is muscovite and phlogopite and most preferably muscovite.

3. The adhesive composition according to claims 1 or 2, wherein the particulate filler is a mineral material comprising at least 20 wt.%, preferably at least 30 wt.%, more preferably at least 50 wt.%, even more preferably at least 70 wt.% of the non-swellable phyllosilicate and optionally other mineral co-components, preferably non-swellable mineral co-components.

4. The adhesive composition according to anyone of claims 1 - 3, wherein the phyllosilicate in the particulate filler is a muscovite comprising 40 - 80 wt.% SiO₂, 10 - 40 wt.% Al₂O₃, 4 - 10% K₂O, preferably the particulate filler is a phengite.

5. The adhesive composition according to anyone of claims 1 - 4, wherein the particle size distribution of the particulate filler as determined by a Micromeritics Sedigraph 5120 is **characterised by** a d98 between 15 and 25 µm, a d90 between 5 and 15 µm, a d50 between 2 and 20 µm and a d30 between 1 and 5 µm.

6. The adhesive composition according to anyone of claims 1 - 5, wherein the adhesive composition comprises a phenol formaldehyde resin solution in water
a) having a dry solids weight of phenol formaldehyde resin relative to the total weight of the resin and water is between 30 and 70 wt.%, preferably between 35 and 60 wt.%, more preferably between 40 and 55 wt.% (measured after 3 hours oven drying at 105°C),
b) having a free alkalinity between 3 and 10 wt.% preferably between 4 and 9 wt.% and more preferably between 5 and 8 wt.% as determined by acid titration and expressed as gr NaOH per 100 gr of the adhesive composition x 100%.
c) having a viscosity preferably between 100 and 2000 mPas, more preferably between 150 - 1700 mPas even more preferably between 200 - 1500 mPas wherein the viscosity is measured with cone/plate Viscometer (Anton Paar MCR-51) with a spindle of 49.978 mm diameter, 0.992° angle and 99 µm truncation at 20°C and a shear rate of 100/s.

7. The adhesive composition according to anyone of claims 1 - 6, consisting of the particulate filler and the phenol formaldehyde resin solution in water and one or more optional additives in a total amount ranging between 0 and 30 wt.%, preferably between 0 and 20 wt.%, more preferably between 1 and 20 wt.% relative to the total weight of the adhesive composition, wherein the further additives are preferably chosen from the list consisting of other fillers, pigments, hardeners, curing catalyst, preferably one or more further additives chosen from the list consisting of starch, wood flour, nutshell flour, chalk.

8. A process for the manufacture of the adhesive composition according to anyone of claims 1 - 7, comprising the steps of
I. providing a phenol formaldehyde resin solution in water
a) wherein the dry solids weight of phenol formaldehyde resin relative to the total weight of the resin and water is between 30 and 70 wt.%, preferably between 35 and 60 wt.%, more preferably between 40 and 55 wt.% (measured after 3 hours oven drying at 105°C),
b) having a free alkalinity between 3 and 10 wt.%, preferably between 4 and 9 wt.% and more preferably between 5 and 8 wt.% as determined by acid titration and expressed as gr NaOH per 100 gr of the adhesive composition x 100%,
c) having a viscosity preferably between 100 and 2000 mPas, more preferably between 150 - 1700 mPas even more preferably between 200 - 1500 mPas wherein the viscosity is measured with cone/plate Viscometer (Anton Paar MCR-51) with a spindle of 49.978 mm diameter, 0.992° angle and 99 µm truncation at 20°C and a shear rate of 100/s,
II. providing particulate filler comprising a non-swellable phyllosilicate, the particulate filler having an average grain size d50 (determined by a Micromeritics sedigraph 5120) ranging between 1 and 20 µm, preferably between 2 and 15 µm, more preferably between 3 and 10 µm,
III. optionally providing additives in a total amount of no more than 30 wt.% relative to the total weight of the adhesive composition,
IV. mixing the phenol formaldehyde resin solution with the particulate filler and optional additives in relative amounts such that the adhesive composition comprises an amount between 20 and 90 wt.%, preferably between 30 and 85 wt.%, more preferably between 40 and 80 wt.% of the particulate filler relative to the total dry solids weight of the adhesive resin and particulate filler.

9. A process for the manufacture of a wood laminate comprising the step of
a. providing two or more wood layers,
b. providing the adhesive composition according to anyone of claims 1 - 7,
c. applying one or more layers of the adhesive composition on at least one surface of the two or more wood layers,
a. preferably in an amount of between 100 and 200 gr/m², more preferably between 100 and 160 gr/m², even more preferably between 100 and 140 gr/m²,
d. stacking the two or more wood layers alternating with the one or more adhesive layers forming an uncured wood laminate stack,
e. optionally allowing the adhesive composition to penetrate into the wood and partially dry,
a. preferably for at least 5, 7 or at least 10 minutes,
f. pressing and curing the uncured wood laminate stack to form the wood laminate in one or more separate pressing steps,
a. preferably at a pressing temperature between 90 and 150 °C, preferably between 100 and 140 °C, more preferably between 110 and 140 °C,
b. preferably at a pressure between 10 and 200 N/cm² and
c. preferably for a total time of at least 2 minutes,
d. wherein the pressing is preferably done at constant temperature and with at least one step at a pressure between 100 and 200 N/cm² for at least 2 minutes.

10. A wood laminate comprising two or more wood layers alternated with one or more adhesive layers of the dried and cured adhesive composition according to anyone of claims 1 - 7, wherein the cured adhesive layer preferably has an average thickness between 10 and 200 µm, preferably between 20 and 180 µm and more preferably 30 and 150 µm and which wood laminate is preferably obtainable by the process of claim 9.

11. The wood laminate according of claim 10, **characterised in that** a test specimen of a dimension 25 x 25 mm², after 72 hours boiling has a shear strength exceeding 1 N/mm² as measured in accordance with the standard EN 314 and meets the class 3 plywood classification.

12. The wood laminate according to claim 10, meeting the technical requirements according to formaldehyde emission test ASTM 6007.

13. Use of the wood laminate according to anyone of claims 10 - 12 for the manufacture of articles for outdoor use.
